# EUROPÄISCHE PATENTSCHRIFT

(11) **EP 2 558 281 B1**
(45) Veröffentlichungstag und Bekanntmachung des Hinweises auf die Patenterteilung: **13.01.2016**
(21) Anmeldenummer: 11702618.7
(22) Anmeldetag: 02.02.2011
(51) Int. Cl.: B29D 29/08, B29D 29/10, F16G 1/06, F16G 5/04, F16G 1/10, F16G 1/28

(54) **PAK-FREIER ANTRIEBSRIEMEN, INSBESONDERE ZAHNRIEMEN**
POLYCYCLIC-AROMATIC-HYDROCARBON-FREE DRIVING BELT, INPARTICULAR TOOTHED BELT
COURROIE DE TRANSMISSION SANS POLYCYCLIQUE AROMATIQUE HYDROCARBURE

(30) Priorität: 12.04.2010 DE 102010016393
(43) Veröffentlichungstag der Anmeldung: 20.02.2013
(73) Patentinhaber: ContiTech Antriebssysteme GmbH, 30165 Hannover (DE)
(72) Erfinder: WELL, Michael, 38159 Vechelde (DE); TEVES, Reinhard, 30926 Seelze (DE); BALTES, Thomas, 30177 Hannover (DE); SATTLER, Heiko, 30900 Wedemark (DE); GUEVENC, Sener, 30459 Hannover (DE)
(74) Vertreter: Preusser, Andrea
(86) Internationale Anmeldenummer: PCT/EP2011/051429
(87) Internationale Veröffentlichungsnummer: WO 2011/128122

(56) Entgegenhaltungen:
- EP-A1- 1 108 750
- EP-A2- 2 101 079
- WO-A1-96/13544
- US-A- 5 860 883

## Beschreibung

Die Erfindung betrifft einen Antriebsriemen mit einem Grundkörper aus einem polymeren Werkstoff mit elastischen Eigenschaften, umfassend eine Decklage als Riemenrücken sowie einen Unterbau mit einer Kraftübertragungszone, wobei
- nach einer ersten Variante in dem Grundkörper wenigstens ein Zugstrang eingebettet ist oder
- nach einer zweiten Variante zwischen der Decklage und dem Unterbau eine Zwischenlage aus einem polymeren Werkstoff mit elastischen Eigenschaften angeordnet ist, wobei in der Zwischenlage wenigstens ein Zugstrang eingebettet ist; oder
- nach einer dritten Variante wenigstens ein Zugstrang eine Festigkeitsträgerlage bildet, wobei zwischen der Festigkeitsträgerlage und der Decklage und/oder zwischen der Festigkeitsträgerlage und dem Unterbau eine Zwischenlage aus einem polymeren Werkstoff mit elastischen Eigenschaften angeordnet ist;
wobei ferner die Decklage und/oder die Kraftübertragungszone mit einer abriebsfesten Beschichtung versehen ist/sind.

Antriebsriemen, die auch als Kraftübertragungsriemen bezeichnet werden und im Funktionszustand zumeist endlos geschlossen sind, können als Flachriemen, Keilriemen, Keilrippenriemen, Zahnriemen und Kupplungsriemen ausgebildet sein. Von besonderer Bedeutung sind der Keilrippenriemen und der Zahnriemen, wobei diesbezüglich auf folgende Patentliteratur verwiesen wird:

| Keilrippenriemen | Zahnriemen |
|---|---|
| DE 38 23 157 A1 | EP 0 599 145 B1 |
| DE 100 16 351 A1 | EP 0 737 228 B1 |
| DE 10 2006 007 509 A1 EP | 0 866 834 B1 |
| EP 0 590 423 A2 | EP 1 088 177 B1 |
| EP 0 737 228 B1 | EP 1 129 308 B1 |
| EP 0 831 247 B1 | EP 1 795 645 A1 |
| EP 0 866 834 B1 | WO 2005/080821 A1 |
| EP 1 108 750 A1 | WO 2006/066669 A1 |
| EP 1 129 308 B1 | US 5 417 618 |
| WO 2009/066492 A1 | JP 2008-291395 A |
| US 3 981 206 | US 5 860 883 |
| US 5 026 327 | EP 2 101 079 A2 |
| US 2003/0121729 A1 | |

Die Elastizität eines Antriebsriemens wird dadurch erreicht, dass der Grundkörper und somit die Decklage und der Unterbau aus einem polymeren Werkstoff mit elastischen Eigenschaften bestehen, wobei hier insbesondere die beiden Werkstoffgruppen Elastomere und thermoplastische Elastomere zu nennen sind. Von besonderer Bedeutung sind Elastomere auf der Basis einer vulkanisierten Kautschukmischung.

Der Antriebsriemen ist mit wenigstens einem in Riemenlängsrichtung verlaufenden eingebetteten Zugstrang nach einer der drei eingangs genannten Varianten versehen, wobei insbesondere mehrere Zugstränge eine Festigkeitsträgerlage bzw. Zugträgerlage bilden. Von besonderer Bedeutung ist dabei ein Zugstrang in Cordkonstruktion, wobei es diesbezüglich nach dem Stand der Technik verschiedenen Werkstoffkonzeptionen gibt. Die wesentlichen Werkstofftypen sind: Stahl, Polyamid (PA), Aramid, Polyester, Glasfasern, Kohlefasern, Basalt, Polyetheretherketon (PEEK), Polyethylentherephthalat (PET) oder Polyethylen-2,6-naphtalat (PEN). Der Zugstrang ist zudem zumeist mit einem Haftsystem, beispielsweise mit einem Resorcin-Formaldehyd-Latex (RFL), präpariert, so dass eine dauerwirksame Haftung zu dem umgebenden polymeren Werkstoff nach einem der drei eingangs genannten Varianten gewährleistet ist.

Insbesondere die Kraftübertragungszone eines Antriebsriemens wird mit einer abriebsfesten Beschichtung versehen, die zusätzlich zur Geräuschreduzierung dient und zudem noch ölbeständig ausgerüstet sein kann. Eingesetzt wird dabei eine Flockauflage, insbesondere in Form eines Baumwoll- oder Aramidflocks, eine dünne mit Fasern (z.B. Aramidfasern) gefüllte elastische Polymerschicht, eine Textilauflage, insbesondere in Form eines Gewebes, Gewirkes oder Gestrickes, oder eine Folie (z.B. PTFE-Folie) oder ein Folienverbund (z.B. PA-PTFE-Folie). Hinsichtlich des diesbezüglichen Standes der Technik wird insbesondere auf folgende Patentliteratur verwiesen:

| | |
|---|---|
| DE 38 23 157 A1 | DE 10 2008 012 044 A1 |
| DE 100 16 351 A1 | US 3 981 206 |
| DE 10 2006 007 509 A1 | US 6 491 598 |
| DE 10 2007 062 285 A1 | |

Diese Beschichtung wird auf der Kontaktseite zum Grundkörper des Antriebsriemens, insbesondere zum dessen Unterbau, zumeist haftfreundlich präpariert, beispielsweise mit RFL.

Schwerpunkt der bisherigen Entwicklungen auf dem Gebiet der Antriebsriemen war die Bereitstellung von abriebsfesten wie auch geräuscharmen Beschichtungen sowie die Suche nach hochleistungsfähigen Zugsträngen und Polymerwerkstoffen.

Bei vielen Produkten, beispielsweise Haushaltsgeräte, Elektrowerkzeuge und Gartengeräte, wird nun zunehmend der Einsatz von schadstoffarmen, insbesondere schadstofffreien, Werkstoffen gefordert. Bei Polymermischungen mit Anwendungen im Fahrzeugbau konzentrierte sich dabei die bisherige Entwicklungsarbeit auf die Gewährleistung N-nitrosaminarmer, insbesondere N-nitrosaminfreier, Polymerwerkstoffe.

Im Rahmen einer Weiterentwicklung besteht nun die Aufgabe der Erfindung darin, schadstoffarme, insbesondere schadstofffreie, Antriebsriemen bereitzustellen, die zudem bedenkenlos in Anwendungsfällen mit Körperkontakt eingesetzt werden können.

Gelöst wird diese Aufgabe dadurch, dass wenigstens die Decklage und/oder der Unterbau frei von Ruß und frei von polycyclischen aromatischen Kohlenwasserstoffen (PAK) ist/sind.

Zweckmäßigerweise sind die Decklage und der Unterbau sowie die Zwischenlage nach der zweiten oder dritten Variante frei von Ruß und PAK-frei. Die Polymermischungen enthalten anstelle des Füllstoffes Ruß, der bereits zumeist PAK enthält, beispielsweise Kieselsäure. Der Weichmacher auf Mineralölbasis, der zumeist ebenfalls PAK enthält, wird durch einen entsprechenden PAK-freien Weichmacher ersetzt.

Da der Zugstrang und die abriebsfeste Beschichtung mit ihrer Kontaktseite zum Grundkörper zumeist mit einem Haftsystem präpariert sind, kommt vorzugsweise ein Haftsystem zum Einsatz, das ebenfalls frei von Ruß und PAK-frei ist.

Der Antriebsriemen ist vorzugsweise frei von Chlor oder einer chlorhaltigen Substanz. Verzichtet wird dabei insbesondere auf den Chloropren-Kautschuk (CR).

Hinsichtlich des Haftsystems für die abriebsfeste Beschichtung kommen vorzugsweise folgende Varianten zum Einsatz:
- Das Haftsystem ist ein RFL auf der Basis von Vinylpyridin.
- Das Haftsystem ist eine Haftfolie, die insbesondere aus einem Polyolefin oder einem Polyamid (PA) besteht. Das Polyolefin ist dabei vorzugsweise Polyethylen (PE) oder Polypropylen (PP).
- Das Haftsystem basiert auf einer Silanbehandlung, insbesondere bei Einsatz einer Textilauflage.

Das Haftsystem für die abriebsfeste Beschichtung kann noch mit einem Farbstoff versehen sein. Das RFL-freie Haftsystem bietet den Vorteil, dass dieses farblos ist, so dass beispielsweise eine beliebige Färbung des Gewebes erfolgen kann. Die Farbstoffeinmischung ist auch für die Polymermischung der Decklage und/oder des Unterbaus möglich, da hier auf den Füllstoff Ruß verzichtet wird.

Anhand einer Mischungsrezeptur wird ein Zahnriemen nach dem Stand der Technik (Tabelle 1) mit einem erfindungsgemäßen PAK-freien Zahnriemen (Tabelle 2) verglichen, und zwar ergänzt durch eine Gegenüberstellung verschiedener Haftsysteme. Beide Zahnriemen hatten eine Zugstranganordnung nach der ersten Variante.

**Tabelle 1**

| **Mischungsbestandteile** | **Mengenanteile** |
|---|---|
| Chloropren (CR) | 100 phr |
| Ruß N 550 | 50 phr |
| Mineralöl | 8 phr |
| Magnesiumoxid | 4 phr |
| Zinkoxid | 3 phr |
| ASM ODPA (a) | 2 phr |
| Vulkanox 3100 (b) | 2 phr |
| Stearinsäure | 1 phr |
| Vulkacit DM/C (c) | 1 phr |

| | |
|---|---|
| (a) Alterungsschutzmittel: Oktyliertes Diphenylamin, Luvvomax ODPA von Lehmann & Voss (b) Alterungsschutzmittel: Gemisch aus Diaryl-p-phenyl-diamin (DTPD) von Lanxess (c) Beschleuniger: Dibenzothiazoldisulfid (MBTS) von Lanxess | |

- Zugstrang:
   Glascorde mit CR-haltigem RFL
- Beschichtung_der Kraftübertragungszone:
   Gewebe aus Polyamid (PA) mit CR-haltigem RFL

**Tabelle 2**

| **Mischungsbestandteile** | **Mengenanteile** |
|---|---|
| Ethylen-Propylen-Dien-Kautschuk (EPDM) | 100 phr |
| Kieselsäure | 40 phr |
| Glykol | 2 phr |
| Sorbinsäure | 10 phr |
| Zinkoxid | 8 phr |
| Paraffinöl | 10 phr |
| Vulkanox ZMB2 (d) | 2 phr |
| Ultramarinblau | 3 phr |
| Perkadox 14-40 (e) | 6 phr |

| | |
|---|---|
| (d) Alterungsschutzmittel: Zink-methyl-mercapto-benzimidazol (e) Peroxid-Vernetzer: Di(tert-butylperoxyisopropyl)benzol von Akzo | |

- Zugstrang:
   Glascorde mit Vinylpyridin RFL
- Beschichtung der Kraftübertragungszone:
   Gewebe aus Polyamid (PA) mit Vinylpyridin RFL und Farbstoff

Weitere vorteilhafte Gestaltungsmöglichkeiten des erfindungsgemäßen Antriebsriemens werden in Verbindung mit der Figurenbeschreibung noch näher vorgestellt.

Die Erfindung wird nun anhand von Ausführungsbeispielen unter Bezugnahme auf schematische Zeichnungen erläutert. Es zeigen:
Fig. 1 einen Aufbau eines Zahnriemens;
Fig. 2 Details eines Zugstranges.

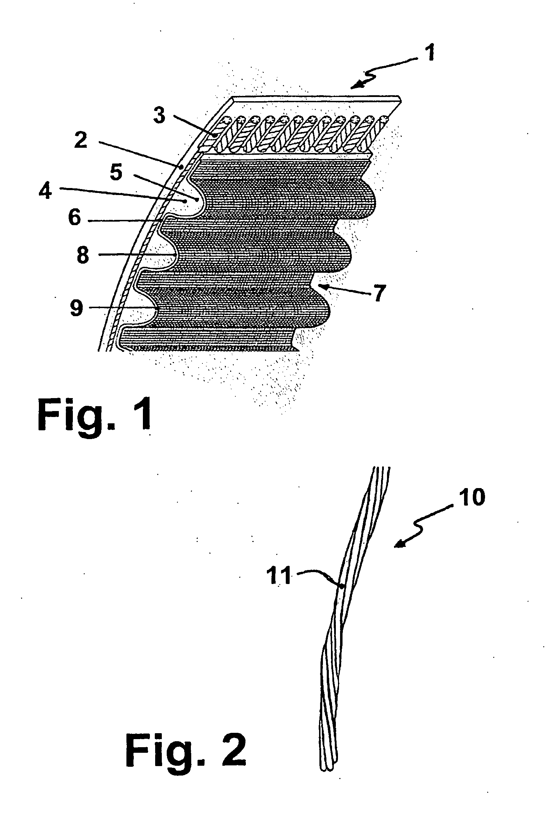

Fig. 1 zeigt einen Antriebsriemen 1 in Form eines Zahnriemens mit einer Decklage 2 als Riemenrücken, mit mehreren in Riemenlängsrichtung eingebetteten und parallel verlaufenden Zugsträngen 3 sowie mit einem Unterbau 4. Der Unterbau ist mit einer zahnförmigen Profilierung, umfassend Zähne 5 und Zahnstege 6, versehen und umfasst die Kraftübertragungszone 7.

Die Decklage 2 und der Unterbau 5 bilden dabei als Gesamteinheit den Grundkörper aus einem polymeren Werkstoff mit elastischen Eigenschaften, insbesondere in Form einer vulkanisierten Kautschukmischung, enthaltend wenigstens eine Kautschukkomponente und Mischungsingredienzien. Als Kautschukkomponente wird insbesondere Ethylen-Propylen-Kautschuk (EPM), Ethylen-Propylen-Dien-Kautschuk (EPDM), (teil)hydrierter Nitrilkautschuk (HNBR), Fluor-Kautschuk (FKM), Naturkautschuk (NR), StyrolButadien-Kautschuk (SBR) oder Butadien-Kautschuk (BR) eingesetzt, die unverschnitten oder mit wenigstens einer weiteren Kautschukkomponente, insbesondere mit einem der vorgenannten Kautschuktypen, verschnitten sind, beispielsweise in Form eines EPM/EPDM- oder SBR/BR-Verschnittes. Von besonderer Bedeutung ist dabei HNBR, EPM, EPDM oder ein EPM/EPDM-Verschnitt. Die Mischungsingredienzien umfassen wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe, beispielweise Fasern zwecks Verstärkung, und Farbpigmente. Diesbezüglich wird auf den allgemeinen Stand der Kautschukmischungstechnologie verwiesen.

Die Kautschukmischung ist frei von Ruß und PAK-frei, und zwar untere gleichzeitigem Verzicht von CR als Kautschukkomponente.

Die Zugstränge 3 sind hier ohne Zwischenlage im Grundkörper eingebettet. Jeder Zugstrang in Cordkonstruktion ist aufgebaut aus einem Filamentmaterial, beispielsweise aus Glasfilamenten. Bei einem Zahnriemen in Ölumgebung sind dabei Gleichschlagcorde besser als normale Gegenschlagcorde. Weitere Zugstrangmaßnahmen werden in Verbindung mit der Fig. 2 noch näher erläutert.

Insbesondere der Unterbau 4 des Antriebsriemens 1 kann zudem gleichmäßig verteilt Fasern, insbesondere Textilfasern, enthalten. Die Fasern bestehen aus Baumwolle, Zellulose, Aramid, insbesondere p-Aramid, Polyamid, insbesondere PA6 oder PA.6.6, Polyvinylacetal (PVA) oder Polyethylentherephthalat (PET). Die Fasern können in Form einer Pulpe (Faserbrei) oder in Kurzfasern vorliegen. Bei Kurzfasern beträgt die Länge ≤ 8 mm, insbesondere ≤ 6 mm.

Die Kraftübertragungszone 7 des Antriebsriemens 1 ist besonders verschleißanfällig durch Abrieb, Hitze und den Einfluss durch Öle. Aus diesem Grunde wird die Kraftübertragungszone mit einer Beschichtung in Form einer Textilauflage 8, beispielsweise in Form eines Gewebes, Gewirkes oder Gestrickes, versehen. Diese Textilauflage kann beispielsweise nach der Lehre des Dokumentes WO 2005/080821 A1 zusätzlich mit einem fluorhaltigen Kunststoff, der insbesondere Polytetrafluorethylen (PTFE) ist, getränkt sein, und zwar bei einem hohen Füllungsgrad dieses Kunststoffes, wobei gleichzeitig eine Polymerbeschichtung (Versiegelung) als zusätzliche ölbeständige Schutzschicht 9 gebildet wird. Die beiden Teilschichten 8 und 9 mit unterschiedlichen Funktionen treten hier als gemeinsame Schutzschicht auf.

Auch die Decklage 2 des Antriebsriemens 1 kann mit einer Beschichtung versehen werden, beispielsweise in der oben beschriebenen Art.

Der Antriebsriemen 1 in seiner besonderen Ausführung als Zahnriemen ist besonders dafür geeignet, eine ölpumpe eines Motors, beispielsweise eines KFZ-Motors, anzutreiben.

Fig. 2 zeigt eine Litze 10, gebildet aus einer Gruppe von Filamenten 11, wobei 100 bis 1000 Filamente, insbesondere 500 bis 700 Filamente, eine Litze bilden. Die Litze liegt dabei zumeist als Litzenhelix vor, was in der Fig. 2 verdeutlicht wird. Eine Gruppe von Litzen bildet schließlich den Cord. Zumeist besteht ein Cord aus wenigstens fünf Litzen, insbesondere aus 10 bis 20 Litzen. Der Cord bildet schließlich den Zugstrang.

Die Filamente 11 bestehen beispielsweise aus Glas. Dies bedeutet, dass somit auch die Litzen 10 und schließlich der Cord als wirksamer Zugstrang 3 (Fig. 1) aus diesem anorganischen Material bestehen.

Die Filamente 11, die Litzen 10 oder der Cord können präpariert sein. Häufig wird der Cord haftfreundlich präpariert, beispielsweise mit RFL. Besonders zweckmäßig ist es, wenn bereits die Filamente 11 präpariert werden, so dass sich präparierte Litzen 10 und letztlich auch ein präparierter Cord bilden. Die Präparation der Filamente erfolgt dabei insbesondere mit einem Vinylpyridin RFL unter Ausbildung einer Filamentummantelung.

### Bezugszeichenliste

- 1: Antriebsriemen (Zahnriemen)
- 2: Decklage als Riemenrücken
- 3: Zugstrang
- 4: Unterbau
- 5: Zahn
- 6: Zahnsteg
- 7: Kraftübertragungszone
- 8: Beschichtung in Form einer Textilauflage (Zahnauflage)
- 9: Schutzschicht
- 10: Litze
- 11: Filament

## Patentansprüche

1. Antriebsriemen (1) mit einem Grundkörper aus einem polymeren Werkstoff mit elastischen Eigenschaften, umfassend eine Decklage (2) als Riemenrücken sowie einen Unterbau (4) mit einer Kraftübertragungszone (7), wobei
- nach einer ersten Variante in dem Grundkörper wenigstens ein Zugstrang (3) eingebettet ist oder
- nach einer zweiten Variante zwischen der Decklage und dem Unterbau eine Zwischenlage aus einem polymeren Werkstoff mit elastischen Eigenschaften angeordnet ist, wobei in der Zwischenlage wenigstens ein Zugstrang eingebettet ist; oder
- nach einer dritten Variante wenigstens ein Zugstrang eine Festigkeitsträgerlage bildet, wobei zwischen der Festigkeitsträgerlage und der Decklage und/oder zwischen der Festigkeitsträgerlage und dem Unterbau eine Zwischenlage aus einem polymeren Werkstoff mit elastischen Eigenschaften angeordnet ist;
wobei ferner die Decklage (2) und/oder die Kraftübertragungszone (7) mit einer abriebsfesten Beschichtung (8) versehen ist/sind, **dadurch gekennzeichnet, dass** wenigstens die Decklage (2) und/oder der Unterbau (4) frei von Ruß und frei von polycyclischen aromatischen Kohlenwasserstoffen (PAK) ist/sind.

2. Antriebsriemen nach Anspruch 1, **dadurch gekennzeichnet, dass** wenigstens die Decklage (2) und/oder der Unterbau (4) frei von Chlor oder einer chlorhaltigen Substanz ist/sind.

3. Antriebsriemen nach Anspruch 1 oder 2, **dadurch gekennzeichnet, dass** die Zwischenlage nach der zweiten oder dritten Variante frei von Ruß und frei von polycyclischen aromatischen Kohlenwasserstoffen (PAK) ist.

4. Antriebsriemen nach einem der Ansprüche 1 bis 3, **dadurch gekennzeichnet, dass** der Zugstrang (3) und/oder die abriebsfeste Beschichtung (8) auf ihrer Kontaktseite zum Grundkörper mit einem Haftsystem präpariert ist.

5. Antriebsriemen nach Anspruch 4, **dadurch gekennzeichnet, dass** das Haftsystem frei von Ruß und frei von polycyclischen aromatischen Kohlenwasserstoffen (PAK) ist.

6. Antriebsriemen nach Anspruch 5, **dadurch gekennzeichnet, dass** das Haftsystem für den Zugstrang (3) und/oder die abriebsfeste Beschichtung (8) ein Resorcin-Formaldehyd-Latex (RFL) auf der Basis von Vinylpyridin ist.

7. Antriebsriemen nach einem der Ansprüche 5 bis 6, **dadurch gekennzeichnet, dass** das Haftsystem für die abriebsfeste Beschichtung (8) eine Haftfolie ist.

8. Antriebsriemen nach Anspruch 7, **dadurch gekennzeichnet, dass** die Haftfolie aus einem Polyolefin oder einem Polyamid (PA) besteht.

9. Antriebsriemen nach Anspruch 8, **dadurch gekennzeichnet, dass** die Haftfolie aus Polyethylen (PE) oder Polypropylen (PP) besteht.

10. Antriebsriemen nach einem der Ansprüche 4 bis 6, **dadurch gekennzeichnet, dass** das Haftsystem für die abriebsfeste Beschichtung (8) auf einer Silanbehandlung basiert.

11. Antriebsriemen nach einem der Ansprüche 4 bis 10, **dadurch gekennzeichnet, dass** das Haftsystem für die abriebsfeste Beschichtung (8) mit einem Farbstoff versehen ist.

12. Antriebsriemen nach einem der Ansprüche 1 bis 11, **dadurch gekennzeichnet, dass** der polymere Werkstoff der Decklage (2) und/oder des Unterbaus (4) und/oder der Zwischenlage für den Zugstrang (3) eine vulkanisierte Kautschukmischung ist, enthaltend wenigstens eine Kautschukkomponente sowie Mischungsingredienzien.

13. Antriebsriemen nach einem der Ansprüche 1 bis 12, **dadurch gekennzeichnet, dass** die Decklage (2) und/oder der Unterbau (4) einen Farbstoff enthält/enthalten.

14. Antriebsriemen nach einem der Ansprüche 1 bis 13, **dadurch gekennzeichnet, dass** der Antriebsriemen (1) als Zahnriemen ausgebildet ist.

## Claims

1. Drive belt (1) with a base made of a polymeric material with elastic properties, comprising an outer layer (2) as belt backing and a substructure (4) with a force-transmission zone (7), where
- in a first variant, there is at least one tension member (3) embedded in the base, or
- in a second variant, there is an intermediate layer made of a polymeric material with elastic properties arranged between the outer layer and the substructure, and there is at least one tension member embedded in the intermediate layer here; or
- in a third variant, at least one tension member forms a reinforcement layer, and there is an intermediate layer made of a polymeric material with elastic properties arranged here between the reinforcement layer and the outer layer and/or between the reinforcement layer and the substructure;
and moreover the outer layer (2) and/or the force-transmission zone (7) here has/have an abrasion-resistant coating (8), **characterized in that** at least the outer layer (2) and/or the substructure (4) is/are free from carbon black and free from polycyclic aromatic hydrocarbons (PAHs).

2. Drive belt according to Claim 1, **characterized in that** at least the outer layer (2) and/or the substructure (4) is/are free from chlorine or chlorine-containing substance.

3. Drive belt according to Claim 1 or 2, **characterized in that** the intermediate layer in the second or third variant is free from carbon black and free from polycyclic aromatic hydrocarbons (PAHs).

4. Drive belt according to any of Claims 1 to 3, **characterized in that** the side on which the tension member (3) and/or the abrasion-resistant coating (8) is/are in contact with the base has been prepared with an adhesive system.

5. Drive belt according to Claim 4, **characterized in that** the adhesive system is free from carbon black and free from polycyclic aromatic hydrocarbons (PAHs).

6. Drive belt according to Claim 5, **characterized in that** the adhesive system for the tension member (3) and/or the abrasion-resistant coating (8) is a resorcinol-formaldehyde latex (RFL) based on vinylpyridine.

7. Drive belt according to any of Claims 5 to 6, **characterized in that** the adhesive system for the abrasion-resistant coating (8) is an adhesive foil.

8. Drive belt according to Claim 7, **characterized in that** the adhesive foil is composed of a polyolefin or of a polyamide (PA).

9. Drive belt according to Claim 8, **characterized in that** the adhesive foil is composed of polyethylene (PE) or polypropylene (PP).

10. Drive belt according to any of Claims 4 to 6, **characterized in that** the adhesive system for the abrasion-resistant coating (8) is based on a silane treatment.

11. Drive belt according to any of Claims 4 to 10, **characterized in that** the adhesive system for the abrasion-resistant coating (8) has a dye.

12. Drive belt according to any of Claims 1 to 11, **characterized in that** the polymeric material of the outer layer (2) and/or of the substructure (4) and/or of the intermediate layer for the tension member (3) is a vulcanized rubber mixture, comprising at least one rubber component and also mixture ingredients.

13. Drive belt according to any of Claims 1 to 12, **characterized in that** the outer layer (2) and/or the substructure (4) comprise(s) a dye.

14. Drive belt according to any of Claims 1 to 13, **characterized in that** the drive belt (1) is designed as toothed belt.

## Revendications

1. Courroie d'entraînement (1) dotée d'un corps de base en matériau polymère à propriétés élastiques, comprenant une couche de recouvrement (2) qui sert de dos de courroie ainsi qu'une sous-structure (4) dotée d'une zone (7) de transfert de force,
au moins un brin de traction (3) étant incorporé dans une première variante dans le corps de base, ou
dans une deuxième variante, une couche intermédiaire en matériau polymère à propriétés élastiques étant disposée entre la couche de recouvrement et la sous-structure, au moins un brin de traction étant incorporé dans la couche intermédiaire ou
dans une troisième variante, au moins un brin de traction formant une couche de renfort, une couche intermédiaire en matériau polymère à propriétés élastiques étant disposée entre la couche de renfort et la couche de recouvrement et/ou entre la couche de renfort et la sous-structure,
la couche de recouvrement (2) et/ou la zone (7) de transfert de force étant dotées d'un revêtement (8) résistant à l'abrasion,
**caractérisée en ce que**
au moins la couche de recouvrement (2) et/ou la sous-structure (4) sont exemptes de noir de carbone et d'hydrocarbures aromatiques polycycliques (PAK).

2. Courroie d'entraînement selon la revendication 1, **caractérisée en ce qu'**au moins la couche de recouvrement (2) et/ou la sous-structure (4) sont exemptes de chlore ou de substances contenant du chlore.

3. Courroie d'entraînement selon les revendications 1 ou 2, **caractérisée en ce que** dans la deuxième ou la troisième variante, la couche intermédiaire est exempte de noir de carbone et exempte d'hydrocarbures aromatiques polycycliques (PAK).

4. Courroie d'entraînement selon l'une des revendications 1 à 3, **caractérisée en ce que** le brin de traction (3) et/ou le revêtement (8) résistant à l'abrasion sont préparés avec un système adhésif sur leur côté en contact avec le corps de base.

5. Courroie d'entraînement selon la revendication 4, **caractérisée en ce que** le système adhésif est exempt de noir de carbone et exempt d'hydrocarbures aromatiques polycycliques (PAK).

6. Courroie d'entraînement selon la revendication 5, **caractérisée en ce que** le système adhésif prévu pour le brin de traction (3) et/ou le revêtement (8) résistant à l'abrasion est un latex de résorcine et formaldéhyde (RFL) à base de vinylpyridine.

7. Courroie d'entraînement selon l'une des revendications 5 et 6, **caractérisée en ce que** le système adhésif prévu pour le revêtement (8) résistant à l'abrasion est un film adhésif.

8. Courroie d'entraînement selon la revendication 7, **caractérisée en ce que** le film adhésif est constitué d'une polyoléfine ou d'un polyamide (PA).

9. Courroie d'entraînement selon la revendication 8, **caractérisée en ce que** le film adhésif est constitué de polyéthylène (PE) ou de polypropylène (PP).

10. Courroie d'entraînement selon l'une des revendications 4 à 6, **caractérisée en ce que** le système adhésif prévu pour le revêtement (8) résistant à l'abrasion est à base d'un traitement au silane.

11. Courroie d'entraînement selon l'une des revendications 4 à 10, **caractérisée en ce que** le système adhésif prévu pour le revêtement (8) résistant à l'abrasion est doté d'un colorant.

12. Courroie d'entraînement selon l'une des revendications 1 à 11, **caractérisée en ce que** le matériau polymère de la couche de recouvrement (2), de la sous-structure (4) et/ou de la couche intermédiaire prévue pour le brin de traction (3) est un mélange de caoutchouc vulcanisé qui contient au moins un composant de caoutchouc ainsi que des ingrédients de mélange.

13. Courroie d'entraînement selon l'une des revendications 1 à 12, **caractérisée en ce que** la couche de recouvrement (2) et/ou la sous-structure (4) contiennent un colorant.

14. Courroie d'entraînement selon l'une des revendications 1 à 13, **caractérisée en ce que** la courroie d'entraînement (1) est configurée comme courroie crantée.
